# EUROPEAN PATENT SPECIFICATION

(11) **EP 3 998 415 B1**
(45) Date of publication and mention of the grant of the patent: **04.09.2024**
(21) Application number: 20836746.6
(22) Date of filing: 07.07.2020
(51) Int. Cl.: F16D 51/22, F16D 65/09

(54) **VEHICLE DRUM BRAKE**
FAHRZEUGTROMMELBREMSE
FREIN À TAMBOUR DE VÉHICULE

(30) Priority: 10.07.2019 JP 2019128079
(43) Date of publication of application: 18.05.2022
(73) Proprietor: Hitachi Astemo, Ltd., Ibaraki 312-8503 (JP)
(72) Inventor: USUI, Koji, Hitachinaka-shi, Ibaraki 312-8503 (JP); NAKAJIMA, Naotoshi, Hitachinaka-shi, Ibaraki 312-8503 (JP)
(74) Representative: Weickmann & Weickmann PartmbB
(86) International application number: PCT/JP2020/026537
(87) International publication number: WO 2021/006263

(56) References cited:
- EP-A1- 3 418 140
- EP-A2- 0 964 177
- WO-A1-95/16147
- JP-A- 2018 028 376
- JP-A- 2019 007 537
- JP-A- 2019 007 537
- JP-A- H1 137 189
- JP-A- H1 137 189
- JP-U- S6 351 937
- US-A- 2 404 054

## Description

### Technical Field

The present invention relates to a vehicle drum brake. In the vehicle drum brake, a pair of brake shoes capable of slidingly contacting a brake drum, and a brake lever that rotates to cause the brake shoes to slidingly contact the brake drum so as to obtain a braking force are accommodated in a back plate. An anchor plate that abuts on one end of each of the pair of brake shoes to rotatably support the brake shoes is fixed on an anchor attachment part that is formed on the back plate in a manner rising inward of the back plate. A guide part that guides a brake cable coupled to the brake lever is fixedly provided inward of the anchor attachment part in a radial direction of the back plate.

### Background Art

Such a vehicle drum brake is already known in PTL 1

### Citation list

### Patent Literature

PTL 1: JP-A-2018-35828

JP H11 37189 A discloses a cable guide pipe support structure for a drum brake with a guide pipe portion detachably supported by a torroidal projection on a back plate of the brake drum. It

### Summary of Invention

### Technical Problem

In the vehicle drum brake disclosed in PTL 1, a guide part integrally provided with a suppression member guides a brake cable with a cantilever structure floating from an anchor plate and an anchor attachment part, and thus a moment and a shear force due to an input from the brake cable act on the guide part, and it is necessary to increase a plate thickness of the suppression member having the guide portion in order to have a strength to withstand the moment and the shear force.

The invention has been made in view of such circumstances, and an object of the invention is to provide a vehicle drum brake capable of increasing a strength of a guide part with respect to a brake cable.

### Solution to Problem

In order to achieve the above object, a first characteristic of the invention is a vehicle drum brake in which a pair of brake shoes configured to slidingly contact a brake drum, and a brake lever configured to rotate to cause the brake shoes to slidingly contact the brake drum so as to obtain a braking force are accommodated in a back plate, an anchor plate that abuts on one end of each of the pair of brake shoes to rotatably support the brake shoes is fixed on an anchor attachment part that is formed on the back plate in a manner rising inward of the back plate, a guide part that guides a brake cable coupled to the brake lever is fixedly provided inward of the anchor attachment part in a radial direction of the back plate, and at least one of the back plate and the anchor plate is integrally provided with a support part that abuts on the guide part to support the guide part.

In addition to a configuration of the first characteristic, a second characteristic of the invention is that the anchor plate and a suppression member that sandwiches the one end of each of the pair of brake shoes together with the anchor attachment part are fixed on the anchor attachment part, and the guide part is integrally provided with the suppression member in a manner projecting toward a center side of the back plate.

In addition to a configuration of the first or second characteristic, a third characteristic of the invention is that the support part abuts on the guide part in a direction parallel to a central axis of the back plate.

In addition to the configuration of the first characteristic, a fourth characteristic of the invention is that the support part abuts on the guide part in the radial direction of the back plate.

In addition to the configuration of the first or second characteristic, a fifth characteristic of the invention is that at least one of the back plate and the anchor plate is integrally provided with a first support part that abuts on the guide part in the radial direction of the back plate and a second support part that abuts on the guide part in a direction parallel to a central axis of the back plate.

### Advantageous Effect

According to the first characteristic of the invention, the support part integrally provided on at least one of the back plate and the anchor plate abuts on the guide part to support the guide part, and thus is capable of ensuring a strength of the guide part while avoiding an increase in the number of members.

According to the second characteristic of the invention, the guide part is integrally provided with the suppression member, and thus is capable of ensuring the strength of the guide part without increasing a plate thickness of the suppression member.

According to the third characteristic of the invention, the support part abuts on the guide part in the direction parallel to the central axis of the back plate, and thus is capable of increasing a strength against a shear force and a vertical component of forces acting on the guide part from the brake cable.

According to the fourth characteristic of the invention, the support part abuts on the guide part in the radial direction of the back plate, and thus is capable of increasing a strength against a moment due to an input acting on the guide part from the brake cable.

According to the fifth characteristic of the invention, the support part abuts on the guide part from both the radial direction of the back plate and the direction parallel to the central axis of the back plate, and thus is capable of increasing the strength against the moment, the shear force, and the vertical component of the forces acting from the brake cable.

### Brief Description of Drawings

[FIG. 1] FIG. 1 is a front view of a drum brake of a first embodiment. (First embodiment)
[FIG. 2] FIG. 2 is a rear view of the drum brake. (First embodiment)
[FIG. 3] FIG. 3 is a perspective view showing a state in which an anchor plate and a suppression member are attached to an anchor attachment part. (First embodiment)
[FIG. 4] FIG. 4 is a cross-sectional view taken along a line 4-4 of FIG. 1 with the brake cable and a coil spring omitted. (First embodiment)
[FIG. 5] FIG. 5 is a cross-sectional view corresponding to FIG. 4 according to a second embodiment. (Second embodiment)
[FIG. 6] FIG. 6 is a cross-sectional view corresponding to FIG. 4 according to a third embodiment. (Third embodiment)
[FIG. 7] FIG. 7 is a cross-sectional view corresponding to FIG. 4 according to a fourth embodiment. (Fourth embodiment)

### Reference Sign List

13 back plate
14 brake drum
15, 16 brake shoe
21 anchor plate
34 brake lever
37 brake cable
45 suppression member
46, 51, 64 anchor attachment part
48, 52, 55, 68 guide part
50, 53, 54, 69 support part
B drum brake

### Description of Embodiments

Embodiments of the invention will be described with reference to the drawings.

### First Embodiment

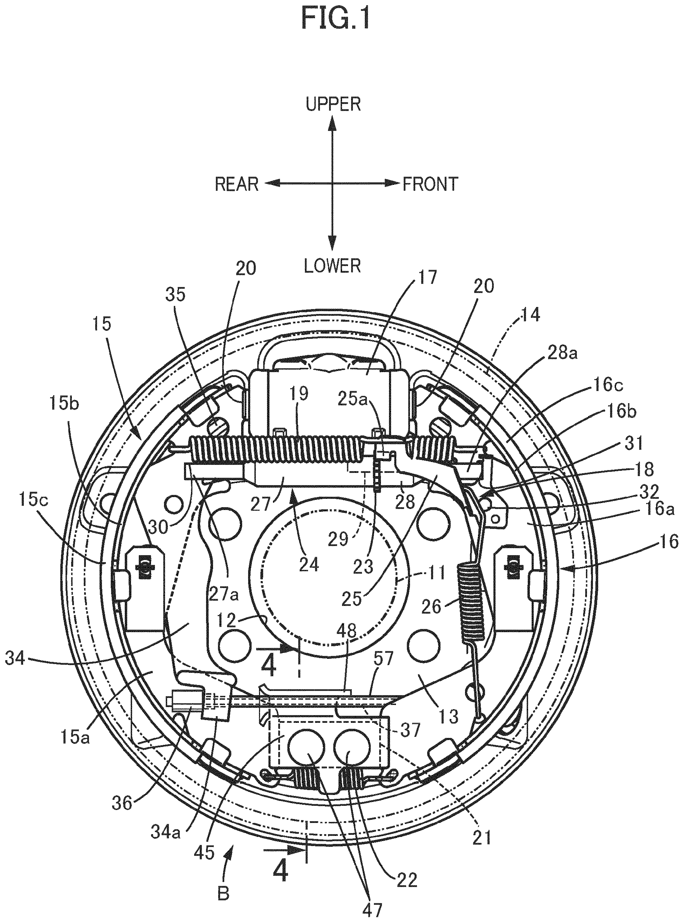

A first embodiment of the invention will be described with reference to FIG. 1 to FIG. 4. First, in FIG. 1, a drum brake B is provided on a wheel of a four-wheeled vehicle, for example, a left rear wheel. The drum brake B includes: a fixed back plate 13 having a through hole 12 in a center for allowing an axle 11 of the left rear wheel to pass through; first and second brake shoes 15, 16 arranged in the back plate 13 in a manner capable of slidingly contacting wifchan inner periphery of a brake drum 14 that rotates together with the left rear wheel; a wheel cylinder 17 fixed to the back plate 13 so as to exert a force for expanding the first and second brake shoes 15, 16; a braking gap automatic adjustment unit (so-called automatic adjuster) 18 that automatically adjusts a gap between the first and second brake shoes 15, 16 and the brake drum 14; and a return spring 19 provided between the first and second brake shoes 15, 16.

The first and second brake shoes 15, 16 are constituted by first and second webs 15a, 16a formed in a bow-like flat plate shape along the inner periphery of the brake drum 14, first and second rims 15b, 16b that are continuously provided in a manner orthogonal to respective outer peripheries of the first and second webs 15a, 16a, and first and second linings 15c, 16c attached to respective outer peripheries of the first and second rims 15b, 16b.

In the back plate 13, an anchor plate 21 serving as a fulcrum during expansion and contraction of the first and second brake shoes 15, 16 is fixed so as to rotatably support one end (lower end in this embodiment) of each of the first and second webs 15a, 16a. The wheel cylinder 17 is fixed on the back plate 13 between the other ends of the first and second brake shoes 15, 16, so as to be operated by an output hydraulic pressure of a master cylinder (not shown) operated by a brake pedal to exert a force for driving the first and second brake shoes 15, 16 toward an expansion side with the anchor plate 21 as the fulcrum. The wheel cylinder 17 includes a pair of pistons 20 each having an outer end facing the other end (upper end in this embodiment) of each of the first and second webs 15a, 16a.

A coil spring 22 is provided between the one ends of the first and second webs 15a, 16a to bias the one ends of the first and second webs 15a, 16a toward the anchor plate 21. The return spring 19 is provided between the other ends of the first and second webs 15a, 16a to bias the first and second brake shoes 15, 16 in a contraction direction.

The braking gap automatic adjustment unit 18 includes: a contraction position control strut 24 that is provided between the first and second webs 15a, 16a of the first and second brake shoes 15, 16 and can be extended by rotation of an adjust gear 23; an adjust lever 25 that includes a feed claw 25a engaging with the adjust gear 23 and is rotatably supported by the second web 16a of the second brake shoe 16 among the first and second brake shoes 15, 16; and an adjust spring 26 that rotatably biases the adjust lever 25 to a side to rotate the adjust gear 23 in a direction to extend the contraction position control strut 24.

The contraction position control strut 24 controls a contraction position of each of the first and second brake shoes 15, 16, and includes: a first rod 27 including a first engaging coupling part 27a, a second rod 28 including a second engaging coupling part 28a and arranged coaxially with the first rod 27, and an adjust bolt 29 whose one end is inserted into the first rod 27 in a manner relatively movable in an axial direction and whose other end is coaxially screwed to the second rod 28. The adjust gear 23 is arranged between the first and second rods 27, 28 and formed on an outer periphery of the adjust bolt 29.

The adjust lever 25 including the feed claw 25a engaged with the adjust gear 23 is rotatably supported by the second web 16a via a support shaft 32. The adjust spring 26 is provided between the second web 16a and the adjust lever 25. A spring force of the adjust spring 26 is set smaller than a spring force of the return spring 19.

The drum brake B includes a parking brake lever 34 that can generate a parking brake force in response to rotation in one direction (counterclockwise direction in FIG. 1). The parking brake lever 34 overlaps with a part of the first web 15a of the first brake shoe 15 in a front view in a direction along a rotation axis of the brake drum 14 (a direction shown in FIG. 1), and extends long along a longitudinal direction of the first web 15a.

A cable end 36 fixed to one end of the brake cable 37 is engaged with a locking part 34a provided at one end (lower end in this embodiment) of the parking brake lever 34. The other end (upper end in this embodiment) of the parking brake lever 34 is rotatably supported by the other end of the first web 15a of the first brake shoe 15 via a pin 35.

The first engaging coupling part 27a of the first rod 27 in the braking gap automatic adjustment unit 18 is engaged with a first locking recess 30 provided in a side edge of the parking brake lever 34 that is near the other end of the parking brake lever 34 and faces the axle 11. The second engaging coupling part 28a of the second rod 28 is engaged with a second locking recess 31 provided at a side edge of the second web 16a of the second brake shoe 16 that is near the other end of the second web 16a and faces the axle 11.

According to the above braking gap automatic adjustment unit 18, in a case where the first and second brake shoes 15, 16 are expanded by a certain value or more due to friction of the first and second linings 15c, 16c when the first and second brake shoes 15, 16 are expanded by an operation of the wheel cylinder 17, the adjust lever 25 is rotated around the axis of the support shaft 32 by the spring force of the adjust spring 26, and thus an effective length of the contraction position control strut 24 is increased and corrected in accordance with rotation of the adjust gear 23.

During a parking brake operation of a vehicle, the parking brake lever 34 is driven to rotate in the counterclockwise direction in FIG. 1 by a traction force input from the brake cable 37 with the pin 35 serving as the fulcrum. By the rotation of the parking brake lever 34, a force in a direction in which the second lining 16c of the brake shoe 16 is brought into pressure contact with the inner periphery of the brake drum 14 acts on the second brake shoe 16 via the contraction position control strut 24. When the parking brake lever 34 is continuously driven to rotate in the counterclockwise direction of FIG. 1, the parking brake lever 34 rotates with an engagement part thereof with the first engaging coupling part 27a of the contraction position control strut 24 serving as a fulcrum. At this time, the first brake shoe 15 expands through the pin 35 and the first lining 15c of the first brake shoe 15 is brought into pressure contact with the inner periphery of the brake drum 14. That is, the parking brake lever 34 is operated to an operation position where the first and second linings 15c, 16c of the first and second brake shoes 15, 16 are brought into pressure contact with the inner periphery of the brake drum 14, and a parking brake state is obtained in this state.

When the brake cable 37 is loosened to stop applying a rotation driving force to the parking brake lever 34, the parking brake lever 34 returns to a non-operation position together with the first and second brake shoes 15, 16, which are operated by the spring force of the return spring 19 in a direction away from the inner periphery of the brake drum 14.

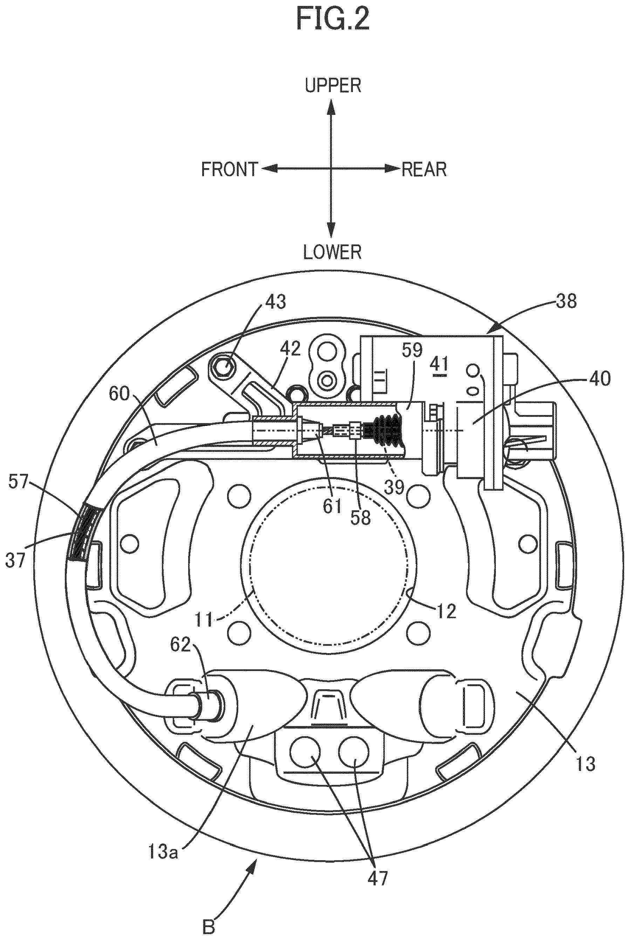

With reference to FIG. 2, the brake cable 37 is pulled by a power exerted by an electric actuator 38. The electric actuator 38 includes: a screw shaft 39 coupled to the brake cable 37; an actuator case 40 that supports the screw shaft 39 in a manner capable of reciprocating in an axis direction while preventing rotation of the screw shaft 39; an electric motor 41 supported by the actuator case 40 in a manner allowing rotation in forward and reverse directions; and a motion conversion mechanism (not shown) interposed between the electric motor 41 and the screw shaft 39 and housed in the actuator case 40 while being capable of converging a rotation motion generated by the electric motor 41 into a linear motion of the screw shaft 39.

The actuator case 40 of the electric actuator 38 is attached to the back plate 13 via an attachment member 42 on a side opposite to the wheel cylinder 17. The attachment member 42 is fixed to the actuator case 40, and fastened to the back plate 13 by a plurality of, for example, three bolts 43.

The brake cable 37 is, except for a part thereof, covered with an inner cable coat 57 made of resin, and one end of the brake cable 37 on the electric actuator 38 side is coupled to the screw shaft 39 of the electric actuator 38 via a cable joint 58. A front part of a lower part of the back plate 13 along a vehicle longitudinal direction is integrally provided with a cylindrical part 13a protruding therefrom. The brake cable 37 is introduced into the back plate 13 from the cylindrical part 13a, and is routed so as to be located at a position lower than the axle 11 in the back plate 13 in a state where the drum brake B is mounted on the wheel.

A protection cylinder 59 that covers a coupling part of the screw shaft 39 and the brake cable 37 is attached to the actuator case 40. Between the protection cylinder 59 and the cylindrical part 13a of the back plate 13, the brake cable 37 is covered by an outer cable 60 together with the inner cable coat 57. Both ends of the outer cable 60 are attached to the protection cylinder 59 and the cylindrical part 13a via guide tubes 61, 62.

The outer cable 60 is made by winding a wire made of, for example, iron into a coil shape, and receives a reaction force output by the electric actuator 38. A metallic cylindrical member may be used instead of the outer cable 60.

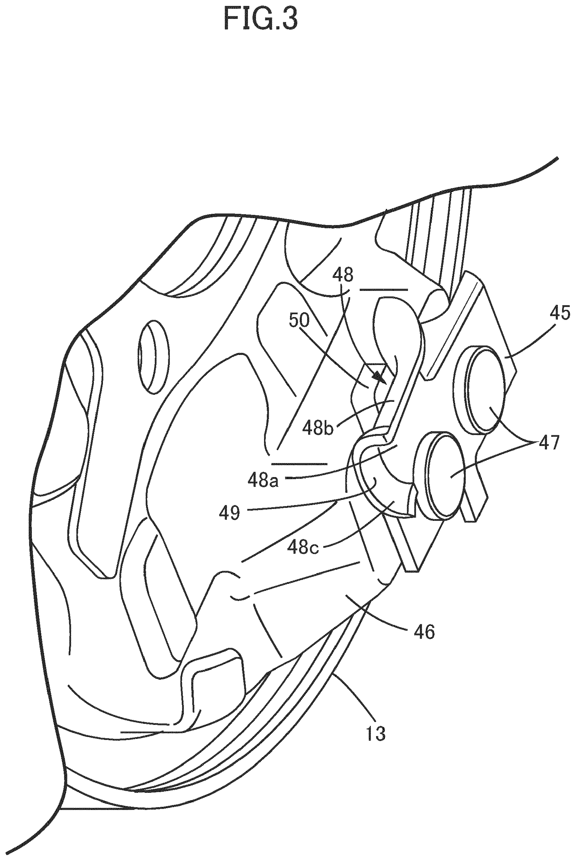

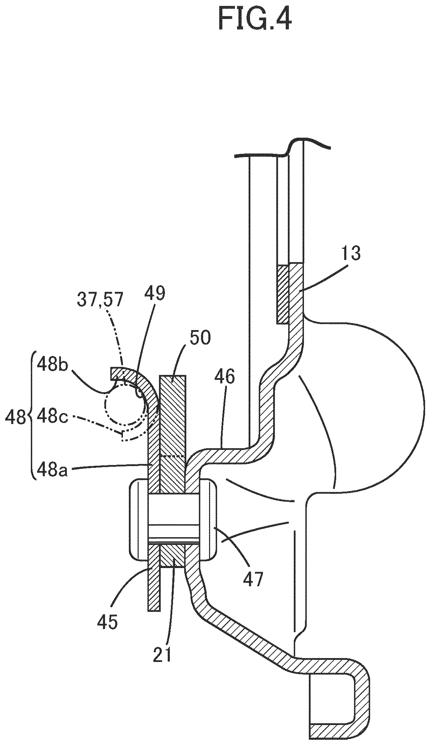

With reference to FIG. 3 and FIG. 4 as well, the anchor plate 21 abuts on one end (lower end) of each of the first and second webs 15a, 16a of the first and second brake shoes 15, 16. The anchor plate 21 and a suppression member 45 that sandwiches the one end of each of the first and second webs 15a, 16a together with the back plate 13 so as to prevent floating of the first and second brake shoes 15 and 16 from the back plate 13 are fixed to an anchor attachment part 46 formed on the back plate 13 in a manner rising inward of the back plate by a pair of rivets 47 in a state in which the anchor plate 21 is sandwiched between the anchor attachment part 46 and the suppression member 45.

A guide part 48 that guides the brake cable 37 covered with the inner cable coat 57 is fixedly provided inward of the anchor attachment part 46 in a radial direction of the back plate 13. In this embodiment, the guide part 48 is integrally provided with the suppression member 45 in a manner projecting from the suppression member 45 toward a center side of the back plate 13.

The guide part 48 integrally includes: a flat plate part 48a which is flush with and continuous with the suppression member 45 and extends toward the center side of the back plate 13, a first curved part 48b which is continuous with a distal end of the flat plate part 48a and is curved in a direction away from the back plate 13, and a second curved part 48c which is continuous with the flat plate part 48a and the first curved part 48b at an end of the parking brake lever 34 side of the flat plate part 48a and forms a substantially U-shaped groove 49 in cooperation with the first curved part 48b.

According to the invention, at least one of the back plate 13 and the anchor plate 21, in the first embodiment, the anchor plate 21, is integrally provided with a support part 50 that abuts on the guide part 48 to support the guide part 48. The support part 50 abuts on the guide part 48 in a direction parallel to a central axis of the back plate 13, and extends from the anchor plate 21 toward the center side of the back plate 13 in a manner flush with and continuous with the anchor plate 21, so as to abut on the flat plate part 48a of the guide part 48 from the back plate 13 side.

Next, an action of the first embodiment will be explained. The anchor attachment part 46 rising inward of the back plate 13 is formed on the back plate 13, the guide part 48 that guides the brake cable 37 covered with the inner cable coat 57 is fixedly provided inward of the anchor attachment part 46 in the radial direction of the back plate 13, and at least one of the back plate 13 and the anchor plate 21, in the first embodiment, the anchor plate 21, is integrally provided with the support part 50 that abuts on the guide part 48 to support the guide part 48. Therefore, it is possible to ensure a strength of the guide part 48 while avoiding an increase in the number of members.

In addition, in the first embodiment, the guide part 48 is integrally provided on the suppression member 45, which is fixed to the anchor attachment part 46 together with the anchor plate 21 so as to sandwich the anchor plate 21 together with the anchor attachment part 46, in a manner projecting toward the center side of the back plate 13. Therefore, it is possible to ensure the strength of the guide part 48 without increasing a plate thickness of the suppression member 45 including the guide part 48.

The support part 50 abuts on the guide part 48 in the direction parallel to the central axis of the back plate 13. Therefore, it is possible to increase a strength against a shear force and a vertical component of forces acting on the guide part 48 from the brake cable 37.

### Second Embodiment

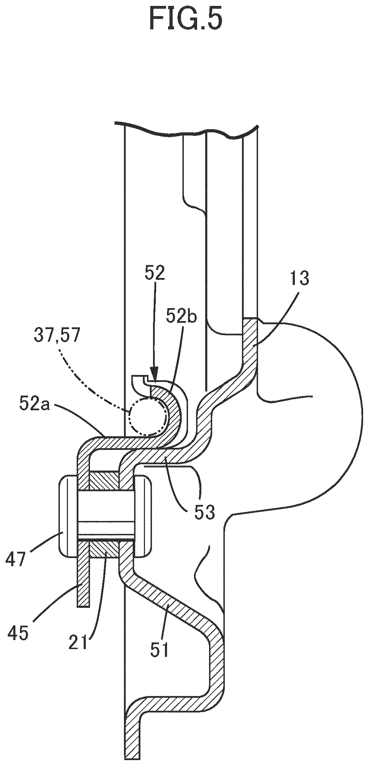

A second embodiment of the invention will be explained with reference to FIG. 5. An anchor attachment part 51 that rises inward of the back plate 13 is formed on the back plate 13. The anchor plate 21 and the suppression member 45 which sandwiches the anchor plate 21 together with the anchor attachment part 51 are fixed to the anchor attachment part 51 by the rivets 47. A guide part 52 that guides the brake cable 37 covered with the inner cable coat 57 is integrally provided on the suppression member 45 in a manner projecting from the suppression member 45 toward the center side of the back plate 13.

The guide part 52 has a substantially J-shaped cross section, and integrally includes: a vertical wall part 52a that extends from an inner end of the suppression member 45 along the radial direction of the back plate 13 to a side that enters the back plate 13, and a curved part 52b that is continuous with a distal end of the vertical wall part 52a and is curved in a semicircular shape. The brake cable 37 is guided by the curved part 52b.

At least one of the back plate 13 and the anchor plate 21, in the second embodiment, the back plate 13, is integrally provided with a support part 53 that abuts on the guide part 52 to support the guide part 52.

The support part 53 is integrally included in the anchor attachment part 51 of the back plate 13, and is integrally formed with the anchor attachment part 51 in a manner abutting on the vertical wall part 52a of the guide part 52, so that the support part 53 abuts on the guide part 52 in the radial direction of the back plate 13.

According to the second embodiment, similar to the first embodiment, it is possible to ensure a strength of the guide part 52 without increasing the plate thickness of the suppression member 45 including the guide part 52 while avoiding the increase of the number of members. In addition, the support part 53 abuts on the guide part 52 in the radial direction of the back plate 13, and thus it is possible to increase a strength against a moment input from the brake cable 37 to the guide part 52.

### Third Embodiment

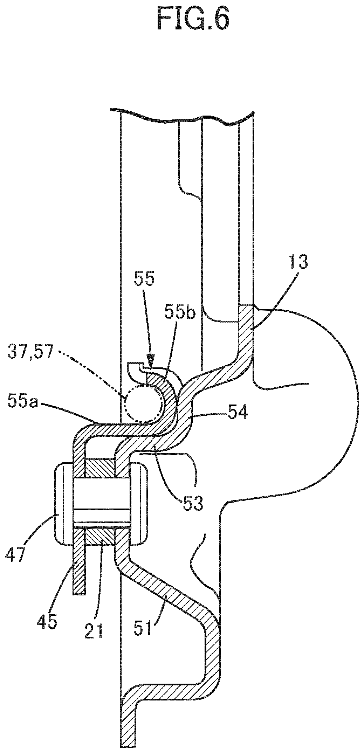

A third embodiment of the invention will be explained with reference to FIG. 6. The anchor attachment part 51 rising inward of the back plate 13 is formed in the back plate 13. The anchor plate 21 and the suppression member 45 sandwiching the anchor plate 21 together with the anchor attachment part 51 are fixed to the anchor attachment part 51 by the rivets 47. A guide part 55 that guides the brake cable 37 covered with the inner cable coat 57 is integrally provided on the suppression member 45 in a manner projecting from the suppression member 45 toward the center side of the back plate 13.

The guide part 55 has a substantially J-shaped cross section, and integrally includes: a vertical wall part 55a that extends from the inner end of the suppression member 45 along the radial direction of the back plate 13 to the side that enters the back plate 13, and a curved part 55b that is continuous with a distal end of the vertical wall part 55a and is curved in a semicircular shape. The brake cable 37 is guided by the curved part 55b.

At least one of the back plate 13 and the anchor plate 21, in the third embodiment, the back plate 13, is integrally provided with first and second support parts 53, 54 that abut on the guide part 55 to support the guide part 55.

The first and second support parts 53, 54 are integrally included in the anchor attachment part 51 of the back plate 13. The first support part 53 abuts on the guide part 55 in the radial direction of the back plate 13, and the second support part 54 abuts on the guide part 55 in a direction parallel to the central axis of the back plate 13.

The first support part 53 is integrally formed with the anchor attachment part 51 in a manner abutting on the vertical wall part 55a of the guide part 55, and the second support part 54 is integrally formed with the anchor attachment part 51 in a manner abutting on the curved part 55b of the guide part 55.

According to the third embodiment, similar to the first embodiment and the second embodiment, it is possible to ensure a strength of the guide part 55 without increasing the plate thickness of the suppression member 45 including the guide part 55 while avoiding the increase of the number of members. In addition, the first support part 53 abuts on the guide part 55 in the radial direction of the back plate 13 and the second support part 54 abuts on the guide part 55 in the direction parallel to the central axis of the back plate 13. Therefore, it is possible to increase a strength against a moment due to input from the brake cable 37 to the guide part 55 and a strength against a shear force and a vertical component of forces acting on the guide part 55 from the brake cable 37.

### Fourth Embodiment

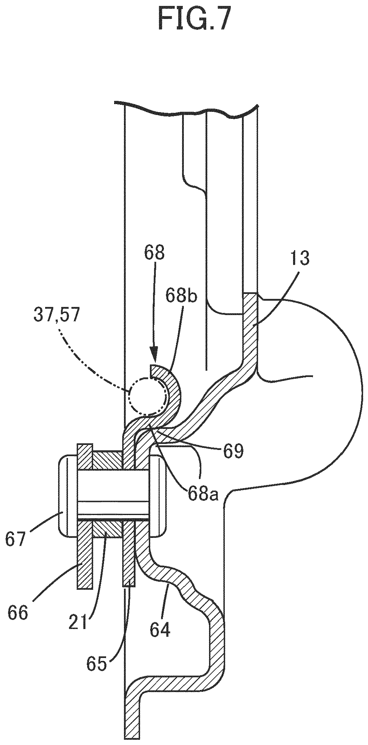

A fourth embodiment of the invention will be explained with reference to FIG. 7. An anchor attachment part 64 that rises inward of the back plate 13 is formed on the back plate 13. The anchor plate 21, a flat plate-shaped plate member 65 sandwiched between the anchor plate 21 and the anchor attachment part 64, and a suppression member 66 that sandwiches the anchor plate 21 and the plate member 65 together with the anchor attachment part 64 are fixed to the anchor attachment part 64 by rivets 67.

A guide part 68 that guides the brake cable 37 covered with the inner cable coat 57 is fixedly provided inward of the anchor attachment part 64 in the radial direction of the back plate 13. In the fourth embodiment, the guide part 68 is integrally provided with the plate member 65 in a manner projecting from the plate member 65 toward the center side of the back plate 13.

The guide part 68 is formed in a substantially J-shaped cross section, and integrally includes: a vertical wall part 68a that extends from an inner end of the plate member 65 along the radial direction of the back plate 13 to the side that enters the back plate 13, and a curved part 68b that is continuous with a distal end of the vertical wall part 68a and is curved in a semicircular shape. The brake cable 37 is guided by the curved part 68b.

At least one of the back plate 13 and the anchor plate 21, in the fourth embodiment, the back plate 13, is integrally provided with a support part 69 that abuts on the guide part 68 to support the guide part 68.

The support part 69 is integrally included in the anchor attachment part 64 of the back plate 13, and is integrally formed with the anchor attachment part 64 in a manner abutting on the vertical wall part 68a of the guide part 68, so that the support part 69 abuts on the guide part 68 in the radial direction of the back plate 13.

According to the fourth embodiment, similar to each embodiment described above, it is possible to ensure a strength of the guide part 68 without increasing a plate thickness of the plate member 65 including the guide part 68 while avoiding the increase of the number of members. In addition, the support part 69 abuts on the guide part 68 in the radial direction of the back plate 13, and thus it is possible to increase a strength against a moment input from the brake cable 37 to the guide part 68.

For example, in the embodiments described above, the brake cable 37 is pulled by the electric actuator 38, while the invention can also be applied to a drum brake in which the brake cable 37 is pulled manually.

## Claims

1. A vehicle drum brake, wherein
a pair of brake shoes (15, 16) configured to slidingly contact a brake drum (14), and a brake lever (34) configured to rotate to cause the brake shoes (15, 16) to slidingly contact the brake drum (14) so as to obtain a braking force are accommodated in a back plate (13),
an anchor plate (21) that abuts on one end of each of the pair of brake shoes (15, 16) to rotatably support the brake shoes (15, 16) is fixed on an anchor attachment part (46, 51, 64) that is formed on the back plate (13) in a manner rising inward of the back plate (13),
a guide part (48, 52, 55, 69) that guides a brake cable (37) coupled to the brake lever (34) is fixedly provided inward of the anchor attachment part (46, 51, 64) in a radial direction of the back plate (13), and
at least one of the back plate (13) and the anchor plate (21) is integrally provided with a support part (50, 53, 54, 69) that abuts on the guide part (48, 52, 55, 68) to support the guide part (48, 52, 55, 68).

2. The vehicle drum brake according to claim 1, wherein
the anchor plate (21) and a suppression member (45) that sandwiches the one end of each of the pair of brake shoes (15, 16) together with the anchor attachment part (46, 51) are fixed on the anchor attachment part (46, 51), and the guide part (48, 52, 55) is integrally provided with the suppression member (45) in a manner projecting toward a center side of the back plate (13).

3. The vehicle drum brake according to claim 1 or 2, wherein
the support part (50, 54) abuts on the guide part (48, 55) in a direction parallel to a central axis of the back plate (13).

4. The vehicle drum brake according to claim 1, wherein
the support part (53, 69) abuts on the guide part (52, 55, 68) in the radial direction of the back plate (13).

5. The vehicle drum brake according to claim 1 or 2, wherein
at least one of the back plate (13) and the anchor plate (21) is integrally provided with a first support part (53) that abuts on the guide part (55) in the radial direction of the back plate (13) and a second support part (54) that abuts on the guide part (55) in a direction parallel to a central axis of the back plate (13).

## Patentansprüche

1. Fahrzeugtrommelbremse, wobei
ein Paar von Bremsschuhen (15, 16), die konfiguriert sind, um eine Bremstrommel (14) gleitend zu kontaktieren, und ein Bremshebel (34), der konfiguriert ist, um durch Drehung zu bewirken, dass die Bremsschuhe (15, 16) die Bremstrommel (14) gleitend kontaktieren, um eine Bremskraft zu erlangen, in einer Rückenplatte (13) untergebracht sind,
eine Ankerplatte (21), die jedes des Paars von Bremsschuhen (15, 16) am einen Ende abstützt, um die Bremsschuhe (15, 16) drehbar zu lagern, an einem Ankerhalterungsteil (46, 51, 64) befestigt ist, das an der Rückenplatte (13) derart ausgebildet ist, dass es einwärts der Rückenplatte (13) hochsteht,
ein Führungsteil (48, 52, 55, 69), das ein mit dem Bremshebel (34) verbundenes Bremskabel (37) führt, in radialer Richtung der Rückenplatte (13) einwärts des Ankerhalterungsteils (46, 51, 64) fest vorgesehen ist, und
zumindest eine der Rückenplatte (13) und der Ankerplatte (21) integriert mit einem Tragteil (50, 53, 54, 69) versehen ist, das sich auf dem Führungsteil (48, 52, 55, 68) abstützt, um das Führungsteil (45, 52, 55, 68) zu tragen.

2. Die Fahrzugtrommelbremse nach Anspruch 1, wobei
die Ankerplatte (21) und ein Unterdrückungselement (45), das das eine Ende von jedem des Paars von Bremsschuhen (15, 16) zusammen mit dem Ankerhalterungsteil (46, 51) schichtweise anordnet, an dem Ankerhalterungsteil (46, 51) befestigt sind, und das Führungsteil (48, 52, 55) integriert mit dem Unterdrückungselement (45) derart versehen ist, dass es zu einer Mittelseite der Rückenplatte (13) hin vorsteht.

3. Die Fahrzeugtrommelbremse nach Anspruch 1 oder 2, wobei
sich das Tragteil (50, 54) auf dem Führungsteil (48, 55) in Richtung parallel zu einer Mittelachse der Rückenplatte (13) abstützt.

4. Die Fahrzeugtrommelbremse nach Anspruch 1, wobei
sich das Tragteil (53, 69) auf dem Führungsteil (52, 55, 68) in der radialen Richtung der Rückenplatte (13) abstützt.

5. Die Fahrzeugtrommelbremse nach Anspruch 1 oder 2, wobei
zumindest eine der Rückenplatte (13) und der Ankerplatte (21) integriert mit einem ersten Tragteil (53) versehen ist, das sich auf dem Führungsteil (55) in der radialen Richtung der Rückenplatte (13) abstützt, sowie einem zweiten Tragteil (54), das sich auf dem Führungsteil (55) in Richtung parallel zu einer Mittelachse der Rückenplatte (13) abstützt.

## Revendications

1. Frein à tambour de véhicule, dans lequel
deux mâchoires de frein (15, 16) configurées pour contacter de manière coulissante un tambour de frein (14), et un levier de frein (34) configuré pour pivoter de façon à amener les mâchoires de frein (15, 16) à contacter de manière coulissante le tambour de frein (14) pour obtenir une force de freinage sont logées dans une plaque arrière (13),
une chape de fixation (21) qui est en butée contre une première extrémité de chacune des deux mâchoires de frein (15, 16) pour supporter en rotation les mâchoires de frein (15, 16) est fixée sur une partie de liaison de fixation (46, 51, 64) qui est formée sur la plaque arrière (13) d'une manière s'élevant vers l'intérieur de la plaque arrière (13),
une partie de guidage (48, 50, 55, 69) qui guide un câble de frein (37) accouplé au levier de frein (34) est disposée de manière fixe vers l'intérieur de la partie de liaison de fixation (46, 51, 64) dans une direction radiale de la plaque arrière (13), et
au moins l'une de la plaque arrière (13) et de la chape de fixation (21) est prévue d'un seul tenant avec une partie support (50, 53, 54, 69) qui est en butée contre la partie de guidage (48, 52, 55, 68) pour supporter la partie de guidage (48, 52, 55, 68).

2. Frein à tambour de véhicule selon la revendication 1, dans lequel
la chape de fixation (21) et un élément de suppression (45) qui prend en sandwich la première extrémité de chacune des deux mâchoires de frein (15, 16) conjointement avec la partie de liaison de fixation (46, 51) sont fixés sur la partie de liaison de fixation (46, 51), et la partie de guidage (48, 52, 55) est prévue d'un seul tenant avec l'élément de suppression (45) d'une manière en saillie vers un côté central de la plaque arrière (13).

3. Frein à tambour de véhicule selon la revendication 1 ou la revendication 2, dans lequel
la partie de support (50, 54) est en butée contre la partie de guidage (48, 55) dans une direction parallèle à un axe central de la plaque arrière (13).

4. Frein à tambour de véhicule selon la revendication 1, dans lequel
la partie de support (53, 69) est en butée contre la partie de guidage (52, 55, 68) dans la direction radiale de la plaque arrière (13).

5. Frein à tambour de véhicule selon la revendication 1 ou la revendication 2, dans lequel
au moins l'une de la plaque arrière (13) et de la chape de fixation (21) est prévue d'un seul tenant avec une première partie de support (53) qui est en butée contre la partie de guidage (55) dans la direction radiale de la plaque arrière (13) et avec une seconde partie de support (54) qui est en butée contre la partie de guidage (55) dans une direction parallèle à un axe central de la plaque arrière (13) .
